# EUROPÄISCHE PATENTSCHRIFT

(11) **EP 2 705 344 B1**
(45) Veröffentlichungstag und Bekanntmachung des Hinweises auf die Patenterteilung: **21.02.2018**
(21) Anmeldenummer: 12719581.6
(22) Anmeldetag: 26.04.2012
(51) Int. Cl.: G01M 17/10

(54) **VERFAHREN ZUM PRÜFEN EINES DREHGESTELLS EINES SCHIENENFAHRZEUGS SOWIE PRÜFSTAND FÜR EIN DREHGESTELL EINES SCHIENENFAHRZEUGS**
METHOD FOR TESTING A BOGIE OF A RAIL VEHICLE AND TEST BENCH FOR A BOGIE OF A RAIL VEHICLE
PROCÉDÉ POUR L'INSPECTION D'UN BOGIE D'UN VÉHICULE FERROVIAIRE ET BANC D'ESSAI POUR UN BOGIE DE VÉHICULE FERROVIAIRE

(30) Priorität: 02.05.2011 DE 102011100207
(43) Veröffentlichungstag der Anmeldung: 12.03.2014
(73) Patentinhaber: Schenck Process Europe GmbH, 64293 Darmstadt (DE)
(72) Erfinder: EHMKE, Fritz, 64397 Modautal (DE)
(86) Internationale Anmeldenummer: PCT/EP2012/001800
(87) Internationale Veröffentlichungsnummer: WO 2012/150018

(56) Entgegenhaltungen:
- DE-A1-102006 051 725

## Beschreibung

### Gebiet der Erfindung

Die Erfindung bezieht sich auf einen Prüfstand für das Drehgestell eines Schienenfahrzeugs sowie auf ein Verfahren zum Prüfen des Drehgestells eines Schienenfahrzeugs auf einem Prüfstand. Insbesondere bezieht sich die Erfindung auf einen Prüfstand, bei welchem das Drehgestell eines Schienenfahrzeugs auf dem Prüfstand mit einer Betriebslast belastet wird und die von dieser Belastung bewirkte Kraftverteilung der Radaufstandskräfte an den einzelnen Rädern des Drehgestells gemessen wird.

### Hintergrund der Erfindung

Die Drehgestelle eines Schienenfahrzeugs und insbesondere deren Radreifen sind hohen Belastungen ausgesetzt. Mit steigenden Geschwindigkeiten, mit denen Schienenfahrzeuge betrieben werden können, steigen die Anforderungen insbesondere an die Geometrie und Radaufstandskraftverteilung der Drehgestelle.

So ist es wichtig, dass die Achsen eines Drehgestells parallel zueinander ausgerichtet sind, da anderenfalls die Laufeigenschaften des Drehgestells ungünstig beeinflusst werden, was dazu führen kann, dass sich das Drehgestell nicht mehr selbst auf der Schiene zentriert und der Spurkranz gegen die Schiene läuft.

Die Drehgestelle von Schienenfahrzeugen werden in regelmäßigen Abständen revidiert. Dabei wird in der Regel das gesamte Drehgestell ausgebaut, die Radreifen und weitere Verschleißteile ausgetauscht und sodann nach einer Kontrolle und Vermessung wieder eingebaut.

Zum Prüfen der Geometrie und Radaufstandskraftverteilung eines Drehgestells gibt es Prüfstände. Dabei werden die Räder des Drehgestells beispielsweise auf Aufnahmeprismen aufgesetzt und die Geometrie sowie die Radaufstandskräfte des Drehgestells können auf dem Prüfstand vermessen werden. Es wird in der Regel nicht nur geprüft, ob die Achsen parallel zueinander liegen, sondern eine Mehrzahl weiterer Geometriedaten muss in einem vorgegebenen Sollbereich liegen. Weiterhin muss die Radaufstandskraftverteilung in einem vorgegebenen Toleranzbereich liegen.

Ein derartiger Prüfstand ist beispielsweise in der deutschen Offenlegungsschrift DE 10 2006 051 725 A1 gezeigt.

Während der Prüfung wird das Drehgestell zur Nachbildung der Waagenkastenmasse über Kraftgeneratoren mit einer Betriebslast belastet, um die Geometrie des Drehgestells auch in belastetem Zustand prüfen zu können. Das Drehgestell wird dabei in der Regel mittels zweiter Kraftgeneratoren symmetrisch belastet. Gleichzeitig wird über Kraftsensoren unter den Aufnahmeprismen gemessen, wie sich die Betriebslast auf die einzelnen Räder verteilt.

Ungleichmäßige Kraftverteilungen, beispielsweise aufgrund ungleichmäßig wirkender Federn des Drehgestells, können so erkannt werden. Das Drehgestell kann sodann gegebenenfalls eingestellt oder instand gesetzt werden.

Die Kraft an den Rädern kann beispielsweise mittels Wägebalken gemessen werden, bei denen an zwei beabstandeten Stellen ein Dehnmessstreifen vorhanden ist. Die Radaufstandspunkte befinden sich dabei in der Mitte zwischen die beiden Dehnmessstreifen. Über die Verformung des Wägebalkens, welche von den Dehnungsmessstreifen erfasst wird, kann die Kraft in vertikaler Richtung relativ genau gemessen werden.

Bevor mit der Prüfung des Drehgestells in Bezug auf die Prüfstandsmitte begonnen wird, wird dieses auf dem Prüfstand aufgesetzt und exakt ausgerichtet. Insbesondere wird das Drehgestell in Fahrtrichtung im Folgenden auch x-Richtung genannt, sowie quer zur Fahrtrichtung, im Folgenden auch y-Richtung genannt, zentriert. Ausgehend von dieser definierenden Nullposition kann die Messung vorgenommen werden. Es wird dabei davon ausgegangen, dass mittels der Kraftgeneratoren eine Kraft in genau vertikaler oder lotrechter Richtung, im Folgenden auch z-Richtung genannt, auf das Drehgestell ausgeübt wird und dass diese vertikale oder lotrechte Kraft sich in ebenfalls lotrecht ausgerichtete Kraftkomponenten an den einzelnen Rädern des Drehgestells verteilt.

Problematisch ist dabei aber, dass aufgrund der Belastung des Drehgestells sich dessen Geometrie durch Verformungen ändern kann. Hierdurch kann die Positionierung des Drehgestells auf dem Prüfstand beeinträchtigt werden.

Wünschenswert für eine möglichst betriebsähnliche Messung wäre, dass sich unter Betriebslast die Räder zumindest in Fahrtrichtung frei bewegen können. Die freie Beweglichkeit der Radaufstandspunkte in den zwei Achsen x und y führt zu labilen Lageverhältnissen aufgrund resultierender Querkräfte, welche bereits von der kleinsten Geometrieungenauigkeit verursacht werden. Die labile Auflagerung des Drehgestells führt bei Querkraft zu einer Auswanderung des Drehgestells in die Richtung der x- bzw. y- Achse, die zu weiterem Anstieg der Querkräfte und somit Querverformungen und Positionierfehlern und Beeinträchtigung der Messungen führt.

Weiter besteht bei Fehlbedienungen des Prüfstandes die Gefahr, dass bei groben Ausrichtungsfehlern die Querkräfte so groß werden, dass das Drehgestell oder Komponenten des Prüfstands beschädigt werden. Aufgrund der hohen Kräfte und der Gefahr eines Lawinen-Effektes können Teile "herausgesprengt" werden, was äußerst gefährlich sein kann.

### Aufgabe der Erfindung

Der Erfindung liegt demgegenüber die Aufgabe zugrunde, die genannten Nachteile des technischen Standes zu reduzieren.

Es ist insbesondere eine Aufgabe der Erfindung, die Messgenauigkeit eines Prüfstands für Drehgestelle zu erhöhen. Eine weitere Aufgabe der Erfindung ist es, die Sicherheit sowohl des Prüfstandes als auch die Sicherheit des Messergebnisses zu erhöhen.

### Zusammenfassung der Erfindung

Die Aufgabe der Erfindung wird bereits durch ein Verfahren zum Prüfen des Drehgestells eines Schienenfahrzeugs auf einem Prüfstand sowie durch einen Prüfstand für das Drehgestell eines Schienenfahrzeugs nach einem der unabhängigen Ansprüche gelöst.

Bevorzugte Ausführungsformen und Weiterbildungen der Erfindung sind den jeweiligen Unteransprüchen zu entnehmen.

Die Erfindung betrifft ein Verfahren zum Prüfen des Drehgestells eines Schienenfahrzeugs auf einem Prüfstand, bei welchem das Drehgestell einer Betriebslast ausgesetzt wird und dabei die vertikalen Kräfte an den Radaufnahmeeinrichtungen des Prüfstands gemessen werden.

In der Regel werden auf dem Prüfstand auch Geometriedaten wie Achsabstand, Radrückenabstand, Drehgestellhöhe etc. gemessen.

Nach dem Verfahren wird zunächst das Drehgestell auf dem Prüfstand zentriert. Dabei wird dieses in Fahrtrichtung und Querlage mittig bezogen auf die Prüfstandsmitte zentriert.

Sodann wird eine Betriebslast simuliert, indem das Drehgestell mittels Kraftgeneratoren einer vertikalen Kraft ausgesetzt wird.

In der Regel werden Kraftgeneratoren mit Spindeln verwendet, die an den beiden Befestigungsstellen, an denen später das Drehgestell am Schienenfahrzeug befestigt wird, eine Kraft in vertikaler Richtung einleiten. So ist sichergestellt, dass die Belastung der Belastung im realen Betrieb möglichst nahekommt.

Gemäß der Erfindung wird an den Radaufnahmeeinrichtungen und/oder an den Kraftgeneratoren zusätzlich eine horizontale Kraftkomponente gemessen und das Drehgestell wird während des Erzeugens der Betriebslast auf dem Prüfstand verschoben, um die gemessene horizontale Kraftkomponente bestmöglich zu reduzieren.

Der Erfindung liegt die Erkenntnis zugrunde, dass eine sicherere und genauere Messung möglich ist, wenn in der Praxis meist vorkommende resultierende Querkräfte durch eine entsprechende Verschiebung des Drehgestells möglichst gering gehalten werden.

Tritt nun an Rädern des Drehgestells oder an den einleitenden Kraftgeneratoren selbst eine horizontale Kraftkomponente auf, kann darauf geschlossen werden, dass entweder die Zentrierung des Drehgestells nicht exakt ist oder dass sich dieses aufgrund der Betriebslast derart verformt hat, dass Asymmetrien entstehen.

Es hat sich gezeigt, dass, egal welche Ursache die auftretende Querkraft hat, eine exaktere und sichere Messung durchgeführt werden kann. Zwangskräfte werden weitgehend vermieden, obwohl das Drehgestell weiterhin fixiert bleibt. Es entstehen keine labilen Zustände, die zu Positionierfehlern sowie zu Verfälschungen der Messwerte, insbesondere der Geometriedaten und Radaufstandskräfte, führen.

Das Verschieben des Drehgestells erfolgt in der Regel durch ein Verschieben der Radaufnahmeeinrichtungen. Es versteht sich, dass nicht immer das gesamte Drehgestell verschoben werden muss, sondern dass wenn beispielsweise Querkräfte nur an einem Rad vorhanden sind, zunächst nur die Aufnahmeeinrichtung dieses Rades verschoben wird.

Vorzugsweise werden horizontale Kraftkomponenten in zwei Richtungen, also insbesondere in Fahrtrichtung (x-Richtung) sowie quer zur Fahrtrichtung (y-Richtung) gemessen.

Die horizontale Kraftkomponente wird vorzugsweise über einen Regelalgorithmus gegen Null geregelt.

Bei einer bevorzugten Ausführungsform der Erfindung wird eine horizontale Kraftkomponente gemessen, indem die vertikalen Kräfte an zwei beabstandeten Stellen gemessen werden.

Bei bekannten Radaufnahmeeinrichtungen eines Prüfstandes sind häufig ohnehin Wägebalken vorhanden, die derart angeordnet sind, dass das Rad zwischen den beiden Wägebalken sitzt. Bislang wurde mit derartigen Wägebalken die Kraft in vertikaler Richtung (z-Richtung) dadurch bestimmt, dass man die an den beiden Wägebalken vorhandenen Kräfte addiert hat.

Ohne zusätzliche Messeinrichtungen kann über diese beiden Wägebalken aber auch eine Querkraft in x-Richtung bestimmt werden, die immer dann auftritt, wenn sich die gemessene Kraft an den beiden Stellen unterscheidet.

Neben der Reduzierung der auftretenden Querkräfte durch Verschiebungen des Prüflings können die gemessenen Querkräfte aber auch als zusätzlicher Messwert aufgezeichnet und kontrolliert werden. So kann nicht nur die Genauigkeit, sondern auch die Sicherheit der Messung auf dem Prüfstand weiter erhöht werden.

Die Erfindung betrifft des Weiteren einen Prüfstand für das Drehgestell eines Schienenfahrzeugs.

Der Prüfstand umfasst Radaufnahmeeinrichtungen, beispielsweise Aufnahmeprismen.

Weiter umfasst der Prüfstand Kraftgeneratoren zum Aufbringen einer vertikalen Betriebslast auf das Drehgestell sowie Kraftmesseinrichtungen zur Messung der vertikalen Kraft an den Radaufnahmeeinrichtungen.

Gemäß der Erfindung umfasst der Prüfstand Mittel zur Messung der horizontalen Kräfte an den Radaufnahmeeinrichtungen.

Im einfachsten Fall kann bei einer Messung einer horizontalen Kraft in x-Richtung bei einem an sich bekannten Prüfstand lediglich die Auswerteeinrichtung dadurch ergänzt werden, dass anhand eines möglichen Kraftunterschiedes in z-Richtung an zwei voneinander beabstandeten Wägebalken eine Querkraft bestimmt wird.

Vorzugsweise umfasst der Prüfstand zur Messung der Kräfte in x-Richtung und zur Messung der Querkraft in y-Richtung an den Radaufnahmeeinrichtungen hierfür jeweils zwei voneinander beabstandete Kraftmesseinrichtungen, mit denen jeweils die vertikalen Kraft in z-Richtung gemessen wird.

Hierbei kann es sich beispielsweise um Wägebalken mit den Dehnmessstreifen handeln.

Ein derartiger Wägebalken kann aus einem massiven Block, beispielsweise aus Metall bestehen, in welchen Schwächungszonen in Form von Ausnehmungen eingebracht sind.

In diesen Ausnehmungen sind Dehnmessstreifen eingeklebt, über die eine Verformung des Wägebalkens recht genau bestimmt werden kann. Da die Dehnmessstreifen in der Schwächungszone sitzen, ist in diesem Bereich die Wegänderung aufgrund einer Durchbiegung des Wägebalkens verstärkt. Anhand der mit den Dehnmessstreifen gemessenen Längenänderungen kann die auftretende Kraft sehr genau bestimmt werden.

Bei einer Weiterbildung der Erfindung umfasst der Prüfstand an den Radaufnahmeeinrichtungen jeweils zwei parallel zueinander angeordnete Wägebalken, welche ihrerseits jeweils zwei voneinander beabstandete Dehnmessstreifen aufweisen. Mit einer derartigen Anordnung können auf einfache Weise auftretende Querkräfte in x-Richtung und z-Richtung bestimmt werden. Die Querkraft wird dabei aus den Moment und der gemessenen Hebellänge bestimmt.

Da bekannte Prüfstände oft ohnehin zwei voneinander beabstandete Wägebalken haben, brauchen diese nur noch um einen zusätzlichen Dehnmessstreifen ergänzt werden, um auch Querkräfte quer zur Fahrtrichtung, also in y-Richtung erfassen zu können.

Es ist sogar denkbar, diese Wägebalken mit einem zusätzlichen Dehnmessstreifen nachträglich in einen bestehenden Prüfstand zu integrieren.

Die Erfindung betrifft weiter einen Prüfstand für das Drehgestell eines Schienenfahrzeugs, insbesondere wie vorstehend beschrieben, welcher Radaufnahmeeinrichtungen, Kraftgeneratoren zum Aufbringen einer vertikaler Betriebslast sowie Kraftmesseinrichtungen zur Messung der vertikalen Kraft an den Radaufnahmeeinrichtungen aufweist.

Gemäß der Erfindung umfasst der Prüfstand Mittel zur Messung der horizontalen Kräfte an den Kraftgeneratoren.

Es ist also vorgesehen, nicht nur die Höhe der simulierten Betriebslast zu bestimmen, sondern auftretende Querkräfte an den Kraftgeneratoren zu bestimmen.

Die Bestimmung dieser Querkräfte kann nicht nur, wie vorstehend beschrieben, verwendet werden, um den Prüfling optimal zu positionieren und so die Ouerkräfte zu minimieren, sondern erhöht schon für sich genommen die Sicherheit des Prüfstandes.

Insbesondere wird vermieden, dass bei eventuellen groben Positionier- und Bedienungsfehlern der Prüfling oder Teile des Prüfstandes beschädigt oder herausgesprengt werden.

Vorzugsweise werden an den Kraftgeneratoren die in das Drehgestell eingeleiteten Kräfte sowohl in x- als auch in y-Richtung gemessen.

Dies erfolgt vorzugsweise ebenfalls über Wägebalken, insbesondere über zwei voneinander beabstandete Wägebalken, welche jeweils zwei voneinander beabstandete Dehnmessstreifen aufweisen.

### Beschreibung der Zeichnungen

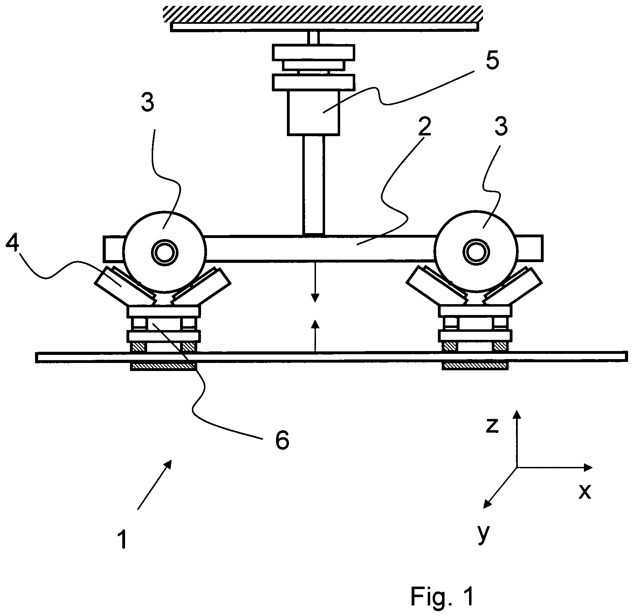

Die Erfindung soll im Folgenden anhand eines schematisch dargestellten Ausführungsbeispiels Bezug nehmend auf die Zeichnungen Fig. 1 bis Fig. 5 näher erläutert werden.

Fig. 1 zeigt einen schematisch dargestellten Prüfstand 1, auf welchem ein Drehgestell 2 aufgesetzt ist.

Das Drehgestell 2 umfasst die Räder 3. Es versteht sich, dass das Drehgestell 2 nur schematisch dargestellt ist und in der Praxis weitere Komponenten, insbesondere eine Federung, umfasst.

Das Drehgestell 2 sitzt mit den Rädern 3 auf verschiebbaren Radaufnahmeeinrichtungen 4. Die Radaufnahmeeinrichtungen 4 sind in diesem Ausführungsbeispiel als Aufnahmeprismen aufgeführt. Es versteht sich, dass häufig auch andere Radaufnahmeeinrichtungen verwendet werden, insbesondere solche, die statt zwei schräg stehenden Flächen zwei Rollen aufweisen, zwischen denen das Rad des Prüflings sitzt.

Über Gewindespindeln (nicht dargestellt) können die Radaufnahmeeinrichtungen 4 einzeln angesteuert und zumindest in x-, vorzugsweise aber auch in y-Richtung verschoben werden.

Über in der Regel zwei Kraftgeneratoren 5, welche eine Spindel aufweisen wird eine Betriebslast simuliert, in dem an Aufnahmepunkten des Drehgestells 2 eine vertikale Kraft eingeleitet wird, indem dieses durch die Kraftgeneratoren in z-Richtung belastet wird.

Vor Durchführung einer Messung wird das Drehgestell 2 auf dem Prüfstand exakt positioniert, insbesondere in x-Richtung (symbolisiert durch die beiden Pfeile).

An bzw. unterhalb der Radaufnahmeeinrichtungen 4 sind Kraftmesseinrichtungen 6 vorgesehen, über die die auf die Radaufnahmeeinrichtungen 4 wirkende Kraft zumindest in z-Richtung gemessen wird.

In der Regel soll so bestimmt werden, ob sich die von den Kraftgeneratoren 5 aufgebrachte Kraft gleichmäßig auf die Räder 3 verteilt.

Gemäß der Erfindung wird an den Radaufnahmeeinrichtungen 4 und/oder an den Kraftgeneratoren 5 die auftretende Querkraft in x- und/oder y-Richtung gemessen.

Über einen Regelalgorithmus werden diese Querkräfte über eine Verschiebung des Drehgestells 2 beziehungsweise der Radaufnahmeinrichtungen 4 gegen Null geregelt.

Das Drehgestell 2 wird dazu über die Radaufnahmeeinrichtungen 4 verschoben.

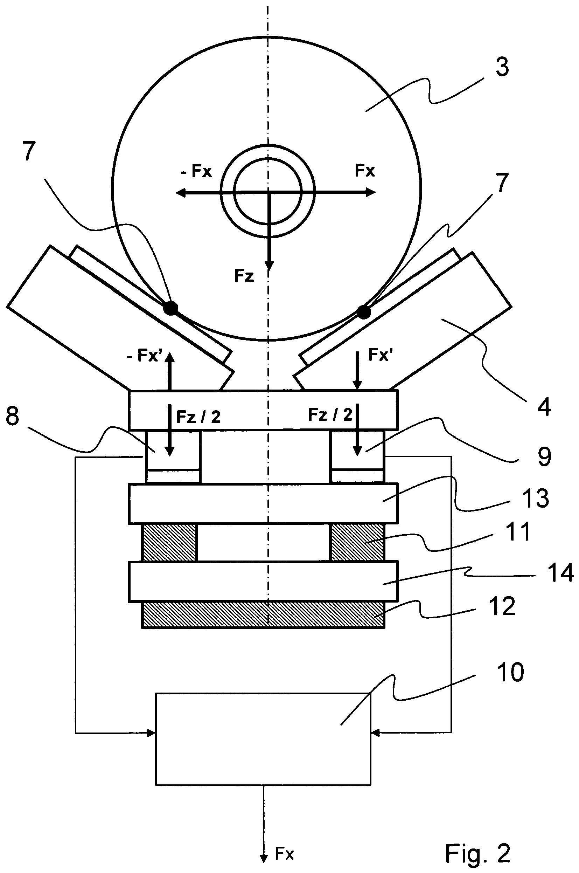

Fig. 2 zeigt eine schematische Detailansicht einer Radaufnahmeeinrichtung 4, auf welcher das Rad 3 an den Radaufstandspunkten 7 aufsitzt.

Unterhalb der Radaufnahmeeinrichtung 4 sind zwei voneinander beabstandete Wägebalken 8, 9 angeordnet, zwischen denen das Rad 3 sitzt.

Die Kraft in z-Richtung verteilt sich nunmehr auf die beiden Wägebalken 8 und 9. Es ist bekannt, so die vertikale Kraft zu bestimmen, in dem die beiden Kraftkomponenten Fz/2 addiert werden.

Systembedingt entstehen bei dieser Messung resultierende Kräfte in x-Richtung, nämlich die Kräfte -Fx' und +Fx', welche aus der Anlage des Rades 3 an den schrägen Flächen der Radaufnahmeeinrichtung 4 basieren. Bei idealer exakter Ausrichtung heben sich diese resultierenden Kräfte genau auf.

Es versteht sich, dass ein derartiger Idealzustand nicht erreicht werden kann, sodass sich die tatsächlich von den Wägebalken 8 und 9 gemessene Kraft in z-Richtung ebenfalls unterscheidet.

Gemäß der Erfindung ist nunmehr eine Auswerteeinrichtung 10 vorgesehen, über die eine auftretende Differenz zwischen den gemessenen Kräften in z-Richtung der Wägebalken 8 und 9 bestimmt wird, und daraus eine mögliche resultierende Querkraft Fx errechnet wird.

Diese resultierende Kraft Fx wird gegen Null geregelt, indem die Radaufnahmeeinrichtung 4 und damit das Drehgestell über einen Schlitten in x-Richtung 12 verschoben wird.

Oberhalb des Schlittens 12 sind noch Schlitten für eine Verschiebung in y-Richtung 11 zu erkennen. Die Schlitten sind jeweils über Träger 13, 14, die Teil des Prüfstandes sind, miteinander verbunden.

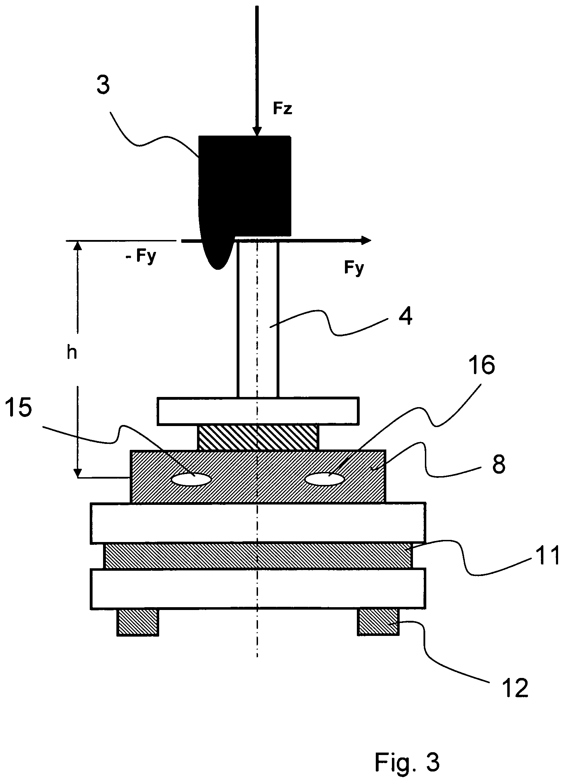

Fig. 3 zeigt eine schematische Ansicht senkrecht zu der Darstellung in Fig. 2, also in Fahrtrichtung bzw. x-Richtung auf die Radaufnahmeeinrichtung 4.

Zu erkennen ist, dass das Rad 3 auf der Radaufnahmeeinrichtung 4 aufsitzt.

Die an der Radaufnahmeeinrichtung 4 angeordneten Wägebalken 8 weisen zwei voneinander beabstandete Ausnehmungen 15, 16 auf, in den jeweils zumindest ein Dehnmessstreifen sitzt (nicht dargestellt).

Die Kraft wird so ebenfalls an zwei Stellen gemessen, zwischen den in y-Richtung das Rad 3 in etwa mittig sitzt. Ähnlich der Darstellung gemäß Fig. 2 kann hier nunmehr anhand von Kraftdifferenzen in Ausnehmungen 15 und 16 auf Querkräfte in y-Richtung geschlossen werden.

Über einen Regelalgorithmus kann nunmehr die Radaufnahmeeinrichtung 4 verschoben und die horizontale Kraft in y-Richtung gegen Null geregelt werden.

Die Dehnmessstreifen an den Stellen 15 und 16 sind vorzugsweise invers geschaltet. Das Ausgangssignal m ist dabei gleich der Höhe h multipliziert mit Fy. Der Regelalgorithmus ist nunmehr so ausgebildet, dass das Ausgangssignal m gegen null geregelt wird.

Zumindest einer der Dehnmessstreifen 15 oder 16 dient in Kombination mit dem Dehnmessstreifen eines weiteren Wägebalkens (nicht zu sehen) dabei gleichzeitig der Bestimmung der Kraft in z-Richtung, wie zuvor in Fig. 2 dargestellt.

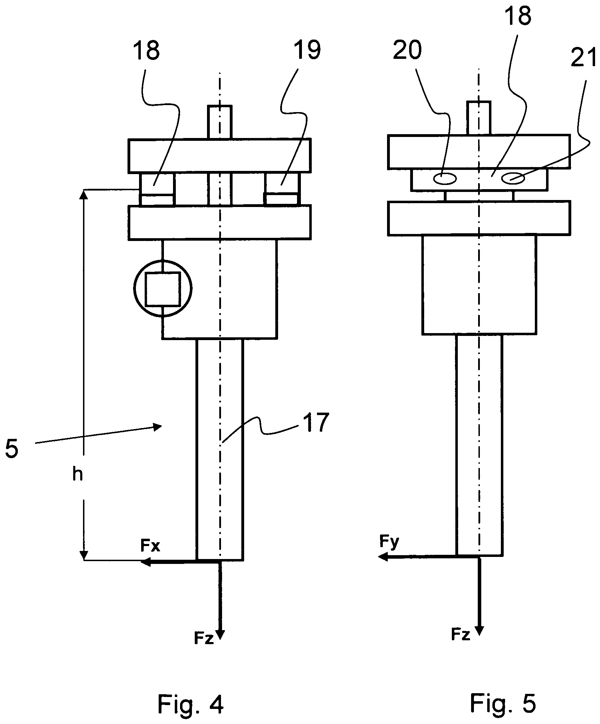

Bezug nehmend auf Fig. 4 und Fig. 5 soll das Prinzip der Querkraftmessung an den Kraftgeneratoren erläutert werden.

Wie in Fig. 4 schematisch dargestellt, umfasst ein Kraftgenerator 5 eine Spindel 17, die über einen Antrieb herausgefahren werden kann und so eine Kraft in vertikaler Richtung in das Drehgestell einleiten kann.

Zur Messung auftretender Querkräfte sind an dem Kraftgenerator 5 zwei Wägebalken 18, 19 angeordnet.

Entsprechend dem zuvor dargestellten Prinzip kann eine mögliche Kraft in x-Richtung anhand eines Unterschiedes der Kräfte in z-Richtung an den Wägebalken 18 und 19 bestimmt werden.

Wie in Fig. 5 zu erkennen, weißt weder der Wägebalken 18, 19 wiederum zwei Ausnehmungen 20, 22 auf, in denen die Messstreifen (nicht dargestellt) angeordnet sind.

So können nunmehr auch auftretende Querkräfte bei der Krafteinleitung durch die Kraftgeneratoren gemessen werden.

Die gemessene Kraft kann wiederum in einen Regelalgorithmus eingehen, über welchen das Drehgestell verschoben wird, um die in x- und y-Richtung auftretenden Querkräfte gegen null zu regeln.

Weiter wird die Sicherheit des Prüfstandes insbesondere durch die Messung der Querkräfte an den Kraftgeneratoren erhöht, da, wenn beispielsweise hohe Querkräfte in Folge grober Bedien- und Positionierungsfehler auftreten, die Kraftgeneratoren gestoppt werden.

Durch die Erfindung kann auf sehr einfache Weise die Sicherheit und Genauigkeit eines Prüfstandes für Drehgestelle für Schienenfahrzeuge erhöht werden.

### Bezugszeichenliste

- 1: Prüfstand
- 2: Drehgestell
- 3: Rad
- 4: Radaufnahmeeinrichtung
- 5: Kraftgenerator
- 6: Kraftmesseinrichtung
- 7: Radaufstandspunkt
- 8: Wägebalken
- 9: Wägebalken
- 10: Auswerteeinrichtung
- 11: Schlitten y-Richtung
- 12: Schlitten x-Richtung
- 13: Träger
- 14: Träger
- 15: Ausnehmung
- 16: Ausnehmung
- 17: Spindel
- 18: Wägebalken
- 19: Wägebalken
- 20: Ausnehmung
- 21: Ausnehmung

## Patentansprüche

1. Verfahren zum Prüfen des Drehgestells eines Schienenfahrzeugs auf einem Prüfstand, umfassend die Schritte:
- Zentrieren des Drehgestells auf dem Prüfstand,
- Erzeugen einer Betriebslast, indem das Drehgestell mittels Kraftgeneratoren (5) einer vertikalen Kraft ausgesetzt wird und Messen der vertikalen Kräfte an Radaufnahmeeinrichtungen (4) des Prüfstands, **dadurch gekennzeichnet, dass** an den Radaufnahmeeinrichtungen (4) und/oder an den Kraftgeneratoren (5) eine horizontale Kraftkomponente gemessen wird und das Drehgestell während des Erzeugens der Betrieblast auf dem Prüfstand durch Verschieben wenigstens einer Radaufnahmeeinrichtung (4) verschoben wird, um die horizontale Kraftkomponente zu reduzieren.

2. Verfahren zum Prüfen eines Drehgestells nach dem vorstehenden Anspruch, **dadurch gekennzeichnet, dass** die horizontale Kraftkomponente über einen Regelalgorithmus gegen Null geregelt wird.

3. Verfahren zum Prüfen eines Drehgestells nach einem der vorstehenden Ansprüche, **dadurch gekennzeichnet, dass** die horizontale Kraftkomponente bestimmt wird, indem die vertikalen Kräfte an zwei beabstandeten Stellen gemessen werden.

4. Verfahren zum Prüfen eines Drehgestells nach einem der vorstehenden Ansprüche, **dadurch gekennzeichnet, dass** horizontale Kraftkomponenten in zwei Richtungen bestimmt werden.

5. Prüfstand für das Drehgestell eines Schienenfahrzeugs, umfassend
- Radaufnahmeeinrichtungen (4),
- Kraftgeneratoren (5) zum Aufbringen einer vertikalen Betriebslast sowie Kraftmesseinrichtungen (8, 9) zur Messung der vertikalen Kraft an den Radaufnahmeeinrichtungen (4),
**dadurch gekennzeichnet, dass** der Prüfstand zur Bestimmung der horizontalen Kräfte in einer x-Richtung und in einer senkrecht zur x-Richtung verlaufenden y-Richtung an den Radaufnahmeeinrichtungen (4) oder den Kraftgeneratoren (5) jeweils zwei voneinander beabstandete Wägebalken (8, 9 , 18, 19) zur Messung der jeweils vertikalen Kraft in einer z-Richtung und eine Auswertevorrichtung aufweist, mit der anhand eines möglichen Kraftunterschiedes zwischen den jeweils in z-Richtung gemessenen vertikalen Kräften eine horizontale Querkraft bestimmt wird.

6. Prüfstand für das Drehgestell eines Schienenfahrzeugs nach Anspruch 5, **dadurch gekennzeichnet, dass** der Prüfstand zur Kraftmessung Wägebalken mit Dehnmessstreifen aufweist.

7. Prüfstand für das Drehgestell eines Schienenfahrzeugs nach Anspruch 5 oder 6, **dadurch gekennzeichnet, dass** der Prüfstand an den Radaufnahmeeinrichtungen (4) oder Kraftgeneratoren (5) jeweils zwei parallel angeordnete Wägebalken (8, 9, 18, 19) aufweist, welche jeweils zwei von einander beabstandete Dehnmessstreifen aufweisen.

## Claims

1. Method for testing the truck of a rail vehicle on a test stand, including the steps:
- centering the truck on the test stand,
- creating an operating load in that the truck is subjected to a vertical force by means of force generators (5), and measuring the vertical forces at wheel supports (4) of the test stand,
**characterized in that** a horizontal force component is measured at the wheel supports (4) and/or at the force generators (5), and the truck is displaced on the test stand during creation of the operating load through displacement of at least one wheel support (4) in order to reduce the horizontal force component.

2. Method for testing a truck according to the preceding claim, **characterized in that** the horizontal force component is regulated to zero through a control algorithm.

3. Method for testing a truck according to one of the preceding claims, **characterized in that** the horizontal force component is determined by measuring the vertical forces at two spaced apart locations.

4. Method for testing a truck according to one of the preceding claims, **characterized in that** horizontal force components are determined in two directions.

5. Test stand for the truck of a rail vehicle, including
- wheel supports (4),
- force generators (5) for imposing a vertical operating load, and force-measuring devices (8, 9) for measuring the vertical force at the wheel supports (4),
**characterized in that**, in order to determine the horizontal forces in an x-direction and in a y-direction perpendicular to the x-direction, the test stand has two mutually spaced-apart weighbeams (8, 9, 18, 19) at each of the wheel supports (4) or force generators (5) for measuring the vertical force in a z-direction in each case, and has an analysis device with which a horizontal lateral force is determined on the basis of a possible force difference between the vertical forces measured in the z-direction in each case.

6. Test stand for the truck of a rail vehicle according to claim 5, **characterized in that** the test stand has weighbeams with strain gauges for force measurement.

7. Test stand for the truck of a rail vehicle according to claim 5 or 6, **characterized in that** the test stand has two weighbeams (8, 9, 18, 19) arranged in parallel at each of the wheel supports (4) or force generators (5), each weighbeam having two strain gauges that are spaced apart from one another.

## Revendications

1. Procédé de contrôle du bogie d'un véhicule ferroviaire sur un banc d'essai, comprenant les étapes suivantes :
- centrage du bogie sur le banc d'essai,
- production d'une charge de service par le fait que le bogie est exposé à une force verticale au moyen de générateurs de force (5), et mesure des forces verticales sur des systèmes de réception de roues (4) du banc d'essai, **caractérisé en ce qu'**une composante horizontale de force est mesurée sur les systèmes de réception de roues (4) et/ou sur les générateurs de force (5) et, pendant la production de la charge de service sur le banc d'essai, le bogie est déplacé par le déplacement d'au moins un système de réception de roues (4) afin de réduire la composante horizontale de force.

2. Procédé de contrôle d'un bogie selon la revendication précédente, **caractérisé en ce que** la composante horizontale de force est réglée vers zéro par le biais d'un algorithme de réglage.

3. Procédé de contrôle d'un bogie selon l'une des revendications précédentes, **caractérisé en ce que** la composante horizontale de force est définie par le fait que les forces verticales sont mesurées en deux emplacements espacés.

4. Procédé de contrôle d'un bogie selon l'une des revendications précédentes, **caractérisé en ce que** des composantes horizontales de force sont définies dans deux directions.

5. Banc d'essai pour le bogie d'un véhicule ferroviaire, comprenant :
- des systèmes de réception de roues (4) ;
- des générateurs de force (5) destinés à l'application d'une charge de service verticale ainsi que des systèmes de mesure de force (8, 9) destinés à la mesure de la force verticale sur les systèmes de réception de roues (4),
**caractérisé en ce que**, pour la définition des forces horizontales dans une direction x et dans une direction y perpendiculaire à la direction x, le banc d'essai présente sur les systèmes de réception de roues (4) ou les générateurs de force (5) respectivement deux poutrelles de pesage (8, 9, 18, 19) espacées l'une de l'autre destinées à la mesure de respectivement la force verticale dans une direction z et un dispositif d'analyse avec lequel une force transversale horizontale est définie à l'aide d'une possible différence de force entre les forces verticales mesurées respectivement dans la direction z.

6. Banc d'essai pour le bogie d'un véhicule ferroviaire selon la revendication 5, **caractérisé en ce que** le banc d'essai présente, pour la mesure de force, des poutrelles de pesage avec des jauges extensométriques.

7. Banc d'essai pour le bogie d'un véhicule ferroviaire selon la revendication 5 ou 6, **caractérisé en ce que**, sur les systèmes de réception de roues (4) ou les générateurs de force (5), le banc d'essai présente respectivement deux poutrelles de pesage (8, 9, 18, 19) disposées parallèlement qui présentent respectivement deux jauges extensométriques espacées l'une de l'autre.
